# EUROPEAN PATENT APPLICATION

(11) **EP 2 587 340 A2**
(43) Date of publication of application: **01.05.2013**
(21) Application number: 12190018.7
(22) Date of filing: 25.10.2012
(51) Int. Cl.: G06F 1/32, G09G 5/00

(54) **Data display apparatus and method for mobile terminal**

(30) Priority: 26.10.2011 KR 20110110008
(71) Applicant: Samsung Electronics Co., Ltd, Gyeonggi-do 443-742 (KR)
(72) Inventor: Kim, Minsu, 443-742 Gyeonggi-do (KR); Cho, Hyojae, 443-742 Gyeonggi-do (KR)
(74) Representative: Harrison Goddard Foote

(57) **Abstract**

An apparatus and a method for a mobile terminal are provided. The data display apparatus includes a control unit, having a frame buffer, for identifying a frame rate of an application to be executed, for notifying, when the application is executable in a limited operation mode using a frame rate lower than a default frame rate set for a normal operation mode, the frame rate lower than the default frame rate and a clock frequency corresponding to the lower frame rate, and for storing, during execution of the application, display data of the application in the frame buffer at the lower frame rate, and a display unit, having a display controller, for accessing, when a frame rate and clock frequency is notified by the control unit, the frame buffer at the notified clock frequency, and for displaying screen data stored in the frame buffer at the notified frame rate.

## Description

### BACKGROUND OF THE INVENTION

### 1. Field of the Invention:

The present invention relates to data display in a mobile terminal. More particularly, the present invention relates to an apparatus and a method that enables a mobile terminal to display data with reduced power consumption by adjusting the frame rate of the display unit.

### 2. Description of the Related Art:

Based on advances in communication and related technologies, mobile terminals are able to perform diverse and composite functions, and are also able to perform multiple functions at the same time. Mobile terminals use batteries as a power source. However, a battery has a limited capacity and when a mobile terminal performs composite functions, the battery is rapidly discharged. Therefore, execution of composite functions reduces usage time of the battery.

Based again on technological advances, screen sizes of mobile terminals have increased and a screen is now able to display high-resolution images. To display a high-resolution image, a mobile terminal may use a display unit having a high frame rate and a large number of pixels corresponding to the screen size.

Mobile terminals tend to use a fixed frame rate of 60 Hz (or 60 frames per second (fps)) and do not change the frame rate during display operation. When a fixed frame rate of 60 Hz is used, it is also applied to display images captured at a lower frame rate (e.g., images captured by a camera). For example, in the case of images captured by a camera at a frame rate of 30 Hz, the control unit stores the images captured at a frame rate of 30 Hz in a frame buffer, and the display unit displays the images stored in the frame buffer at a frame rate of 60 Hz. Here, the display unit displays the images two times, thus consuming unnecessary battery power. Further, when a mobile terminal is equipped with a display unit having a large screen size, the display of high-resolution images may cause even more unnecessary battery power consumption.

Therefore, a need exists for an apparatus and a method for reducing battery power consumption when displaying images.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method that enables a mobile terminal to reduce battery power consumption due to image data display by adjusting the frame rate of the display unit.

Another aspect of the invention is to provide a display apparatus and a method for a mobile terminal wherein the mobile terminal examines the frame rate used by an application to be executed, and changes, when the frame rate of the application is lower than that of the display unit, the frame rate and data access settings of the display unit so as to reduce battery power consumption.

In accordance with an aspect of the present invention, a data display apparatus for a mobile terminal is provided. The apparatus includes a control unit, having a frame buffer for identifying a frame rate of an application to be executed, for notifying, when the application is an application executable in a limited operation mode using a frame rate lower than a default frame rate set for a normal operation mode, the frame rate lower than the default frame rate and a clock frequency corresponding to the lower frame rate, and for storing, during execution of the application, display data of the application in the frame buffer at the lower frame rate, and a display unit, having a display controller, for accessing, when a frame rate and clock frequency is notified by the control unit, the frame buffer at the notified clock frequency, and for displaying screen data stored in the frame buffer at the notified frame rate.

In accordance with another aspect of the present invention, a data display method for a mobile terminal is provided. The method includes identifying a frame rate of an application to be executed, changing, when the application is an application executable in a limited operation mode using a frame rate lower than a default frame rate set for a normal operation mode, settings of a display unit by notifying the frame rate lower than the default frame rate and a clock frequency corresponding to the lower frame rate to the display unit, and controlling, during execution of the application, an operation to store display data of the application in a frame buffer at the lower frame rate, and controlling the display unit to access the frame buffer at the notified clock frequency and to display screen data stored in the frame buffer at the notified frame rate.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram of a mobile terminal according to an exemplary embodiment of the present invention;

FIG. 2 is a flowchart of a display procedure based on analysis of application data according to an exemplary embodiment of the present invention; and

FIG. 3 is a flowchart of a display procedure based on types of applications according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relate to an apparatus and a method that enables a mobile terminal to reduce the frame rate of display data so as to reduce battery power consumption. The apparatus and the method helps the mobile terminal to cope with ever-increasing demand for power due to a large and high-resolution display screen. In one exemplary embodiment, instead of using a fixed frame rate for display, the frame rate of display data is selectively changed according to types of applications. That is, when an application not requiring a high frame rate is executed, the mobile terminal displays image data produced by the application at a frame rate lower than the default frame rate, thereby reducing the amount of power consumed by the display unit.

For example, typical image data, such as moving images captured by a camera, does not have a frame rate greater than 30 frames per second (fps). Similarly, for applications having a User Interface (UI) rendering rate of 30 fps, the display unit does not need to operate at a rate of 60 Hz. In such cases, the mobile terminal may change configuration settings of the display unit from 60 Hz to 30 Hz. This may halve a processing load of the display driver controlling the screen display, thereby reducing the amount of power consumed by the display unit.

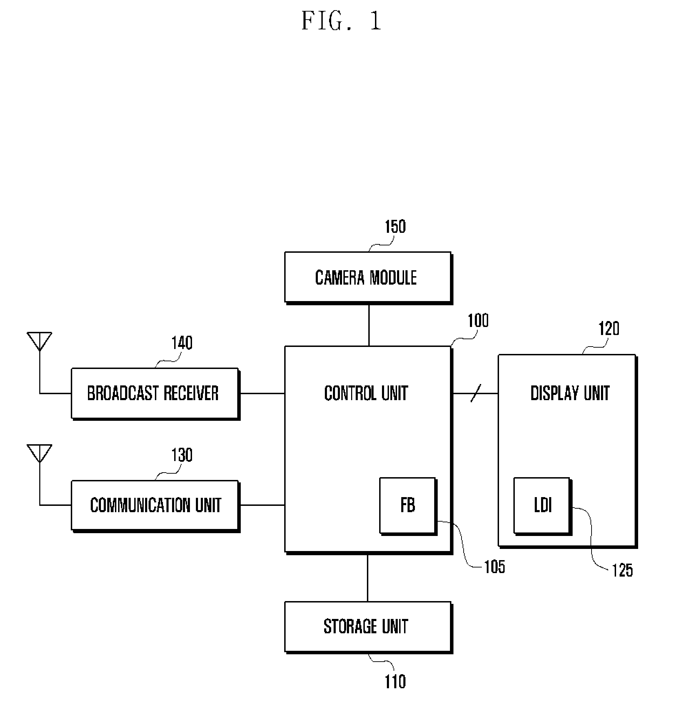

FIG. 1 is a block diagram of a mobile terminal according to an exemplary embodiment of the present invention.

Referring to FIG. 1, a mobile terminal includes a control unit 100, a storage unit 110, a display unit 120, a communication unit 130, a broadcast receiver 140, and a camera module 150.

The communication unit 130 performs wireless communication with a base station or another mobile terminal. The communication unit 130 may include a transmitter (not shown) for upconverting the frequency of a signal to be transmitted and amplifying the signal, and a receiver (not shown) for low-noise amplifying a received signal and downconverting the frequency of the received signal. The communication unit 130 may further include a modulator/demodulator (not shown), which modulates a signal to be transmitted and forwards the modulated signal to the transmitter, and demodulates a signal received through the receiver. Here, modulation and demodulation may be conducted according to any known communication standard such as Long Term Evolution (LTE), Wideband Code Division Multiple Access (WCDMA), Global System for Mobile (GSM) Communications, Wi-Fi, Wireless Broadband (WiBro), Near Field Communication (NFC), Bluetooth, and the like.

The control unit 100 controls operations of the mobile terminal, and performs operations for the power saving mode. The control unit 100 may be an Application Processor (AP) for controlling application execution. The control unit 100 includes a Frame Buffer (FB) 105, and stores display data produced during application execution in the frame buffer 105 in units of frames.

The storage unit 110 may include a program section to store programs for operating the mobile terminal and implementing functions of the present invention. The storage unit 110 may also include a data section to store tables used for the mobile terminal and data generated in the course of using the mobile terminal. More particularly, the storage unit 110 may store a table specifying reduced frame rates and/or applications using a reduced frame rate in the power saving mode.

The display unit 120 displays display data buffered in the frame buffer 105 under control of the control unit 100. The display unit 120 includes a Liquid Crystal Display (LCD) Driver IC (LDI) 125 acting as a display controller and display elements, and displays display data stored in the frame buffer 105 at an indicated frame rate under control of the control unit 100. The display controller 125 drives the display elements. Furthermore, a plurality of display controllers may be employed according to various considerations such as the screen size, the number of colors to be processed by the display elements, and the like. Here, the display unit 120 may be realized using LCD elements or Organic Light Emitting Diodes (OLEDs). In the following description, it is assumed that LCD technology is applied to the display unit 120. However, this is merely for discussion and not intended to be limiting.

The broadcast receiver 140 demodulates and decodes a received broadcast signal. The camera module 150 captures images of objects at a preset frame rate under control of the control unit 100.

In the mobile terminal having the above configuration, the control unit 100 examines application or UI data to be displayed, and controls the display unit 120 to display the application or UI data at a lower frame rate when the application or UI data does not require high-speed display. This serves to reduce battery power consumption through a more efficient display operation.

In recent years, as the size of display units has increased, the resolution thereof also increases. Table 1 illustrates amounts of electric current consumed by display units having different screen sizes and resolutions. In Table 1, the amount of current consumed by the display unit having a screen size of 4.27" and a resolution of 800*480 is indicated by 100 percent.

**Table 1**

| Screen size | 4.27" | 4.65" | 5.29" |
|---|---|---|---|
| Resolution | 800*480 | 1280*720 | 1280*800 |
| Screen on standby | 100% | 124% | 201% |
| Moving image playback | 100% | 219% | 236% |
| Moving image capture | 100% | 125% | 170% |
| Browsing | 100% | 120% | 170% |

Currently, mobile terminals can display image data at a maximum frame rate of 60 Hz. As indicated by Table 1, when using a fixed frame rate of 60 Hz, the amount of current consumed by the display unit significantly increases with an increased screen size or resolution.

There are some cases processed by a mobile terminal that do not need high-speed data display. For example, images produced by a camera module, data displayed in a standby state, still images in a movie, TV data, and other types of display data do not require image update at a high frame rate. To effectively handle these cases, the control unit 100 reduces the frame rate for a display operation and notifies the display controller 125 of the reduced frame rate. The display controller 125 drives display elements of the display unit 120 so as to display screen data stored in the frame buffer 105 at the reduced frame rate. In the following description, a "normal operation mode" refers to an operation mode in which image data is displayed at a default frame rate, such as a frame rate of 60 fps, without frame rate change, and a "limited operation mode" refers to an operation mode in which image data is displayed at a reduced frame rate, such as a frame rate of 30 fps, with frame rate reduction.

Information regarding applications that are executable in the limited operation mode may be pre-stored in the storage unit 110. Further, image data such as camera-captured images, movies, TV broadcasts, and the like may carry frame rate information (i.e., number of frames per second) as meta information (control information). To display specific image data, the control unit 100 may determine frame rate information in the meta information of the image data, and control, when the image data is processible in the limited operation mode, an operation to display the image data at a frame rate specified for the limited operation mode.

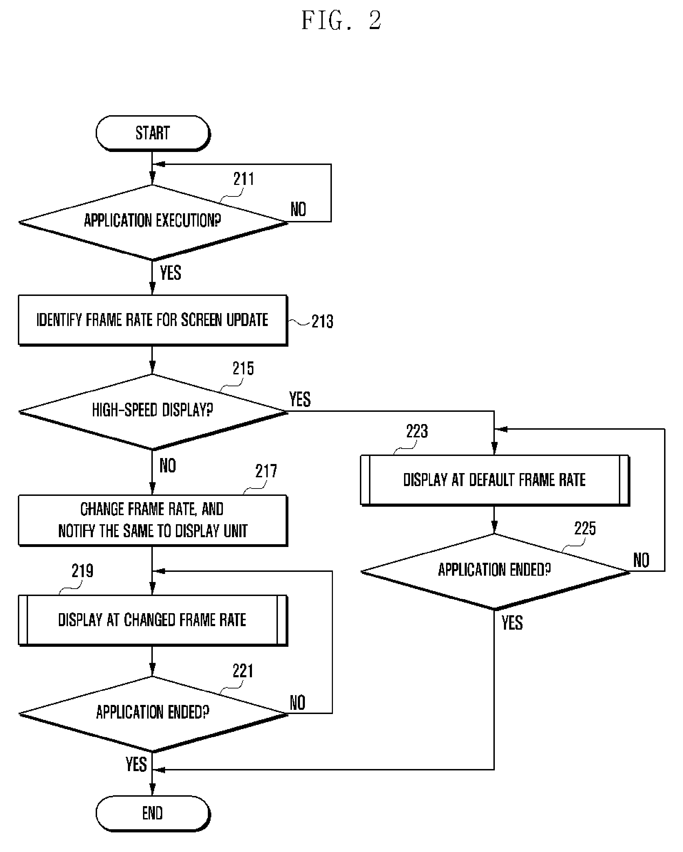

FIG. 2 is a flowchart of a display procedure based on analysis of application data according to an exemplary embodiment of the present invention.

Referring to FIG. 2, the control unit 100 determines if an execution request for an application is detected in step 211. When an application execution request is detected, the control unit 100 identifies frame rate information for screen update required by the application in step 213. Here, the frame rate information may be identified by referring to pre-stored information on applications to be executed in the limited operation mode or by examining control information (meta information) of the application. The control unit 100 determines whether the identified frame rate information for screen update indicates high-speed display in step 215. When the identified frame rate information for screen update does not indicate high-speed display (that is, the application is executable in the limited operation mode), the control unit 100 sets the frame rate for the limited operation mode and notifies the display unit 120 of the set frame rate in step 217. Thereafter, during application execution, the control unit 100 stores display data produced by the application in the frame buffer 105 according to the set frame rate and controls the display unit 120 to display the stored display data at the set frame rate in step 219. Here, the control unit 100 may also lower the clock frequency of the display controller 125 according to the reduced frame rate.

For example, assuming that the frame rate is 60 fps in the normal operation mode and is 30 fps in the limited operation mode, the control unit 100 notifies the display unit 120 of a frame rate of 30 fps in step 217, and controls the display unit 120 to display screen data stored in the frame buffer 105 at a frame rate of 30 fps in step 219. Here, the control unit 100 may also lower the clock frequency of the display controller 125 in accordance with a frame rate of 30 fps. The adjusted frame rate is sustained until execution of the application ends. That is, when it is determined that execution of the application ends in step 221, the control unit 100 ends the procedure. As described above, lowering the frame rate of application data not requiring high-speed display may lead to a reduction in power consumed by the display unit 120 and the control unit 100.

When it is determined in step 215 that the identified frame rate information for screen update indicates high-speed display, the control unit 100 stores display data produced by an executed application in the frame buffer 105 according to the frame rate in the normal operation mode, and controls the display unit 120 to display the stored display data at the frame rate in the normal operation mode in step 223. For example, a 3D gaming application may be executed in the normal operation mode. In this case, the control unit 100 may store display data produced by the application in the frame buffer 105 according to a frame rate of 60 fps, and control the display unit 120 to display the stored display data at a frame rate of 60 fps. The default frame rate is sustained until execution of the application ends. That is, when it is determined that execution of the application ends in step 225, the control unit 100 ends the procedure.

The limited operation mode of the present invention may be applied to various applications that display a still image in the idle state, perform playback of camera-captured images, perform playback of moving images such as movies and TV broadcasts, and the like. Here, movies and TV broadcasts may include control information (meta information) indicating a desired frame rate. The control unit 100 may determine one of the normal operation mode and the limited operation mode to be used to display such moving images by checking control information thereof.

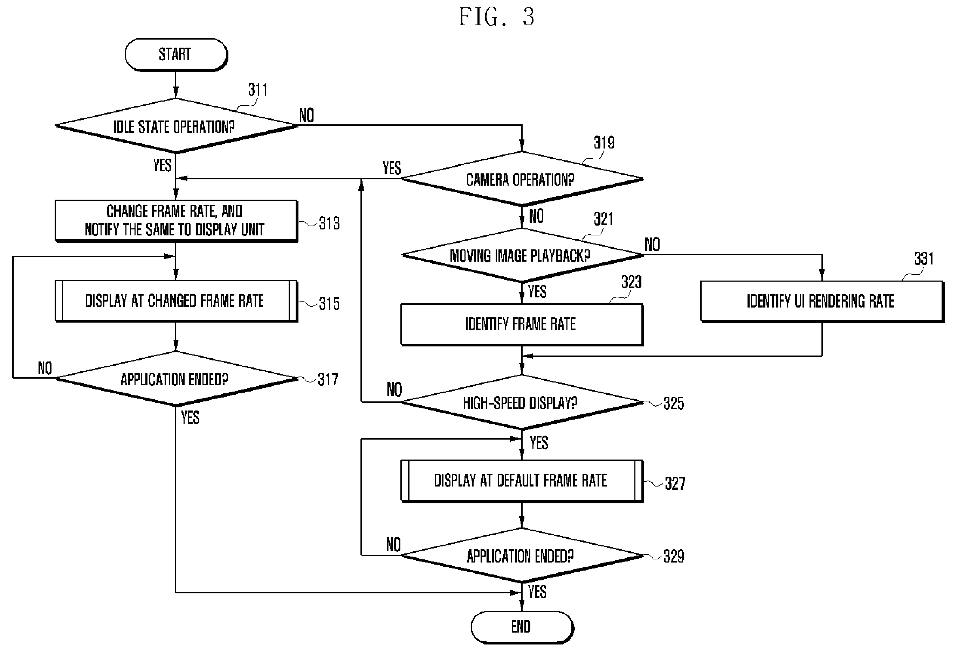

FIG. 3 is a flowchart of a display procedure based on types of applications according to an exemplary embodiment of the present invention.

Referring to FIG. 3, in response to an execution request for an application, the control unit 100 determines whether the application is for idle state operation in step 311. When the application is for idle state operation, the control unit 100 sets the frame rate for the limited operation mode and notifies the display unit 120 of the set frame rate in step 313. Thereafter, the control unit 100 stores display data produced by an executed application in the frame buffer 105 according to the set frame rate and controls the display unit 120 to display the stored display data at the set frame rate in step 315. In an exemplary implementation, the control unit 100 notifies the display unit 120 of a frame rate of 30 fps, and controls the display unit 120 to display screen data stored in the frame buffer 105 at a frame rate of 30 fps. The control unit 100 may also lower the clock frequency of the display controller 125 in accordance with a frame rate of 30 fps. The adjusted frame rate is sustained until execution of the application ends. That is, when it is determined that execution of the application ends in step 317, the control unit 100 ends the procedure.

When it is determined in step 311 that the application is not for idle state operation, the control unit 100 determines whether the application is for camera operation in step 319. When the application is for camera operation, the control unit 100 proceeds to step 313 and controls an operation to display images captured by the camera module 150 in the limited operation mode. In general, the camera module 150 may produce image data at a frame rate of up to 30 Hz. That is, the frame rate of moving images or preview images captured by the camera module 150 typically does not exceed 30 fps. Hence, a camera-related application may be executed in the limited operation mode so as to reduce current consumption.

The frame rate of TV broadcasts receivable by the mobile terminal, similar to the frame rate of moving images like movies, typically does not exceed 30 fps. Generally, image data such as TV broadcasts and movies carries frame rate information as control information. When it is determined in step 319 that the application is not for camera operation, the control unit 100 determines whether the application is for moving image playback in step 321. When the application is for moving image playback, the control unit 100 identifies the frame rate required by the application in step 323. Here, the frame rate information may be obtained by examining control information of the application. The control unit 100 determines whether the identified frame rate information indicates high-speed display in step 325. When the identified frame rate information does not indicate high-speed display (e.g. is, the application is executable in the limited operation mode), the control unit 100 proceeds to step 313. On the other hand, when the identified frame rate information indicates high-speed display (that is, a frame rate of 60 Hz), the control unit 100 stores display data produced by the application in the frame buffer 105 according to a frame rate of 60 Hz, and controls the display unit 120 to display screen data stored in the frame buffer 105 at a frame rate of 60 Hz in step 327.

When the UI rendering rate of an application is limited to 30 fps, the control unit 100 and display unit 120 need not operate at a rate of 60 Hz. The UI rendering rate of an application may be pre-stored in the storage unit 110 or contained in control information thereof. When it is determined in step 321 that the application is not for moving image playback, the control unit 100 identifies the UI rendering rate of the application in step 331. The control unit 100 determines whether the identified UI rendering rate indicates high-speed display in step 325. When the identified UI rendering rate indicates high-speed display, the control unit 100 proceeds to step 327 for the normal operation mode. On the other hand, when it is determined that the identified UI rendering rate does not indicate high-speed display, the control unit 100 proceeds to step 313 for the limited operation mode. When it is determined that execution of the application ends in step 329, the control unit 100 ends the procedure.

As described above, an exemplary data display method of the present invention does not require additional structures or hardware changes. The method enables the mobile terminal to use a default frame rate, such as a frame rate of 60 Hz, for screen update in regular operations and to use a reduced frame rate, such as a frame rate of 30 Hz for screen update in executing applications not requiring high-speed display. Compared with display in the normal operation mode, display in the limited operation mode may reduce the amount of consumed current by about 50 percent. For example, in the case of an LCD screen having a resolution of 1280 X 800, the amount of data processing per second in the normal operation mode corresponds to (vfp + 1280 + vbp) * (hfp + 800 + hbp) * 24bit * 60Hz. When a frame rate of 30 Hz is used in the limited operation mode, as the amount of data processing is reduced by 50 percent and the clock frequency may also be reduced by about 50 percent, the amount of current consumed by LDI data processing, except for the amount of current consumed by the panel, may be reduced by up to 50 percent. In addition, as the amount of data sent by the control unit 100 to the display unit 120 decreases, the amount of current consumed by the control unit 100 also decreases. Table 2 illustrates reduction of current consumption in the idle state.

**Table 2**

| | 60 Hz | 30 Hz | Difference |
|---|---|---|---|
| Current consumed by control unit | 88.4 mA | 63.2 mA | 25.2 mA |
| Current consumed by display unit | 85 mA | 48.2 mA | 36.8 mA |

When the mobile terminal starts to execute an application or function that may be displayed using a frame rate lower than the default frame rate, the control unit 100 may change the clock frequency and settings for the display unit 120 in accordance with a reduced frame rate, such as a frame rate of 30 Hz, in a moment of screen transition, so that the amount of LDI processing for screen control is reduced by 50 percent. Thereby, it is possible to reduce the amount of current consumed by the display unit 120 and the control unit 100.

In an exemplary feature of the present invention, the data display apparatus and method enable the mobile terminal to reduce battery power consumption by adjusting the frame rate of the display unit according to application type. For example, in the case of a mobile terminal having a display unit with a frame rate of 60 Hz, when the mobile terminal executes an application producing image data at a frame rate of 30 Hz, reducing the frame rate of the display unit to 30 Hz may not only reduce the amount of data processing by 50 percent, but also reduce the clock frequency required for data processing by approximately 50 percent. Thereby, current consumed by the LDI for data processing may be reduced by up to 50 percent except for current consumed by the LCD panel. As the amount of image data sent from the control unit to the display unit decreases, current consumed by the control unit may also be reduced.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A data display apparatus for a mobile terminal, the apparatus comprising:
a control unit, having a frame buffer, for identifying a frame rate of an application to be executed, for notifying, when the application is executable in a limited operation mode using a frame rate lower than a default frame rate set for a normal operation mode, the frame rate lower than the default frame rate and a clock frequency corresponding to the lower frame rate, and for storing, during execution of the application, display data of the application in the frame buffer at the lower frame rate; and
a display unit, having a display controller, for accessing, when a frame rate and a clock frequency are notified by the control unit, the frame buffer at the notified clock frequency, and for displaying screen data stored in the frame buffer at the notified frame rate.

2. The apparatus of claim 1, wherein the control unit examines control information of an application to be executed, notifies, when the control information indicates a frame rate set for the limited operation mode, the frame rate lower than the default frame rate set for the normal operation mode to the display unit, and stores, during execution of the application, display data of the application in the frame buffer at the lower frame rate.

3. The apparatus of claim 2, wherein, when the frame rate and the clock frequency are notified, the display controller of the display unit controls a display operation to access the frame buffer at the notified clock frequency and to display screen data stored in the frame buffer at the notified frame rate.

4. The apparatus of claim 3, wherein the application executable in the limited operation mode comprises at least one of an application related to camera operation, an idle state operation, a television broadcast reception, and a moving image playback.

5. The apparatus of claim 4, wherein the default frame rate set for the normal operation mode is 60 frames per second (fps) and the frame rate set for the limited operation mode is 30 fps.

6. The apparatus of claim 1, wherein the control unit identifies the frame rate of the application to be executed by determining at least one of pre-stored information of the application and control information of the application.

7. The apparatus of claim 6, wherein the control information comprises meta information.

8. A data display method for a mobile terminal, the method comprising:
identifying a frame rate of an application to be executed;
changing, when the application is an application executable in a limited operation mode using a frame rate lower than a default frame rate set for a normal operation mode, settings of a display unit by notifying the frame rate lower than the default frame rate and a clock frequency corresponding to the lower frame rate to the display unit;
controlling, during execution of the application, an operation to store display data of the application in a frame buffer at the lower frame rate; and
controlling the display unit to access the frame buffer at the notified clock frequency and to display screen data stored in the frame buffer at the notified frame rate.

9. The method of claim 8, wherein the application executable in the limited operation mode comprises at least one of an application related to camera operation, an idle state operation, a television broadcast reception, and a moving image playback.

10. The method of claim 9, wherein the default frame rate set for the normal operation mode is 60 frames per second (fps) and the frame rate set for the limited operation mode is 30 fps.

11. The method of claim 8, wherein the identifying of the frame rate of the application to be executed comprises determining at least one of pre-stored information of the application and control information of the application.

12. The method of claim 11, wherein the control information comprises meta information.
